# FASCICULE DE BREVET EUROPEEN

(11) **EP 0 717 265 B1**
(45) Date de publication et mention de la délivrance du brevet: **01.03.2000**
(21) Numéro de dépôt: 95402711.6
(22) Date de dépôt: 30.11.1995
(51) Int. Cl.: G01D 5/16, G01D 5/249

(54) **Codeur magnétique pour la lecture de marques sur une piste magnétique associée**
Magnetischer Kodierer zum Lesen von Markierungen auf einer dazugehörigen magnetischen Spur
Magnetic coder for reading marks on an associated magnetic track

(30) Priorité: 02.12.1994 FR 9414536
(43) Date de publication de la demande: 19.06.1996
(73) Titulaire: COMMISSARIAT A L'ENERGIE ATOMIQUE, 75015 Paris Cédex 15 (FR)
(72) Inventeur: Fedeli, Jean-Marc, F-38140 Beaucroissant (FR); Saro, Miguel, F-38170 Seyssinet (FR); Vieux-Rochaz, Line, F-38360 Sassenage (FR)
(74) Mandataire: Dubois-Chabert, Guy

(56) Documents cités:
- DE-A- 4 309 442
- FR-A- 2 657 189
- JOURNAL OF APPLIED PHYSICS, vol. 69, no. 8, 15 Avril 1991 NEW YORK, pages 5408-5410, XP 000240935 MOUNTFIELD ET AL 'modeling of horizontal magnetoresistive recording heads'
- IEEETRANSLATION JOURNAL ON MAGNETICS IN JAPAN, vol. 7, no. 9, NEW YORK, pages 705-713, XP 000348906 IKEDA ET AL 'MR Sensor for Magnetic encoder'

## Description

### Domaine technique

La présente invention a pour objet un codeur magnétique pour la lecture de marques sur une piste magnétique associée.

Elle concerne en particulier un codeur incrémental par exemple pour la mesure de mouvements relatifs entre deux objets.

L'invention s'applique en particulier aux domaines de la robotique et des machines outils.

### Etat de la technique antérieure

Pour mesurer des mouvements relatifs entre deux objets, il est connu d'effectuer des mesures de déplacement au moyen de codeurs. Ces codeurs qui sont le plus souvent des codeurs linéaires ou des codeurs angulaires comportent, d'une part, une règle graduée qui est portée par l'un des objets et, d'autre part, au moins un lecteur qui est porté par l'autre objet.

La règle graduée du codeur comporte une ou plusieurs pistes (ou canaux) sur lesquelles sont inscrites des graduations, appelées plus couramment marques, qui peuvent être de type divers et en particulier des marques magnétiques.

D'une façon générale, les codeurs actuellement connus se divisent en deux grands groupes : les codeurs absolus et les codeurs incrémentaux. Cette division des codeurs est réalisée en fonction du type d'informations que chaque codeur est apte à délivrer :
- un codeur absolu délivre une information qui correspond à la position du lecteur sur la règle de mesure. Aussi, chaque graduation de la règle est repérée d'une façon unique et ne peut être confondue avec aucune autre graduation. Dans ce cas, le lecteur lit le repérage sur la règle.
- un codeur incrémental délivre une information élémentaire chaque fois que la position lecteur/règle varie d'une graduation. Aussi, toutes les graduations portent la même information et, pour reconnaître les déplacements entre le lecteur et la règle, il faut compter le nombre d'informations lues par le lecteur.

Le comptage est effectué à partir d'une ou plusieurs marques dites "top zéro".

A ce sujet plusieurs pistes magnétiques peuvent être prévues et correspondent par exemple à des informations de "top zéro", des informations de déplacement et de sens de déplacement.

Les codeurs magnétiques connus comportent généralement quatre magnétorésistances montées généralement deux par deux en série dans deux branches parallèles d'un pont de mesure du codeur.

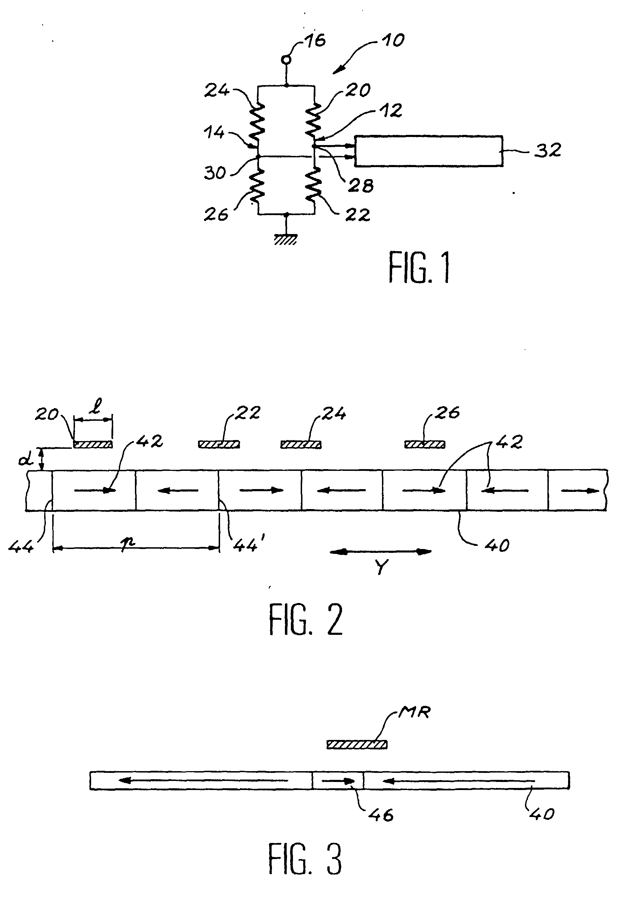

Comme le montre la figure 1 annexée, le pont de mesure 10 présente deux branches 12, 14 branchées en parallèle entre une source de tension 16 et la masse. Des magnétorésistances 20, 22 et 24, 26 mises en série forment respectivement les branches 12 et 14.

Le signal de mesure est prélevé en des bornes 28 et 30, disposées sur les branches 12 et 14 respectivement entre les magnétorésistances 20 et 22 et les magnétorésistances 24 et 26. Ce signal est ensuite dirigé vers un amplificateur d'une unité d'exploitation de mesure 32.

Les magnétorésistances sont disposées en ligne et tournées vers une piste d'un support magnétique. La figure 2 illustre une telle piste magnétique ainsi que, de façon très schématique, la disposition relative des magnétorésistances.

La piste magnétique 40 comporte une pluralité de régions successives 42 d'aimantation opposée, ces régions pouvant être considérées comme des marques du support magnétique. On désigne par le pas p la période spatiale séparant par exemple le début 44 d'une région 42 et le début 44' d'une région 42 suivante de même aimantation. Dans le cas de la figure où les régions ont toutes la même longueur, le pas correspond à la longueur de deux régions 42.

Comme on peut le voir sur la figure 2, les magnétorésistances sont disposées de telle façon que lorsque deux d'entre elles sont à une position où elles sont traversées par un flux maximum, les deux autres magnétorésistances sont traversées par un flux minimum.

Dans la position représentée les magnétorésistances 20 et 26 sont à une position de "maximum" (i.e. en regard d'une seule région 42) et les magnétorésistances 22 et 24 à une position de "minimum" (i.e. a cheval sur deux régions 42). Un mouvement relatif du codeur et de la bande magnétique d'une amplitude p/4 dans le sens Y inverse cette situation.

Lorsque le codeur et la bande magnétique sont mis en mouvement l'un par rapport à l'autre, on obtient aux bornes 28 et 30 (non représentées sur la figure 2) un signal sinusoïdal permettant de compter les déplacements linéaires ou rotatifs à partir d'une référence.

De plus, un deuxième pont de mesure identique à celui de la figure 1 avec des magnétorésistances placées respectivement à une distance correspondant à p/8 de celles du premier pont, permet de recueillir un autre signal sinusoïdal, décalé en temps, qui permet de détecter, par rapport au premier signal, le sens du déplacement du codeur ou de la piste magnétique.

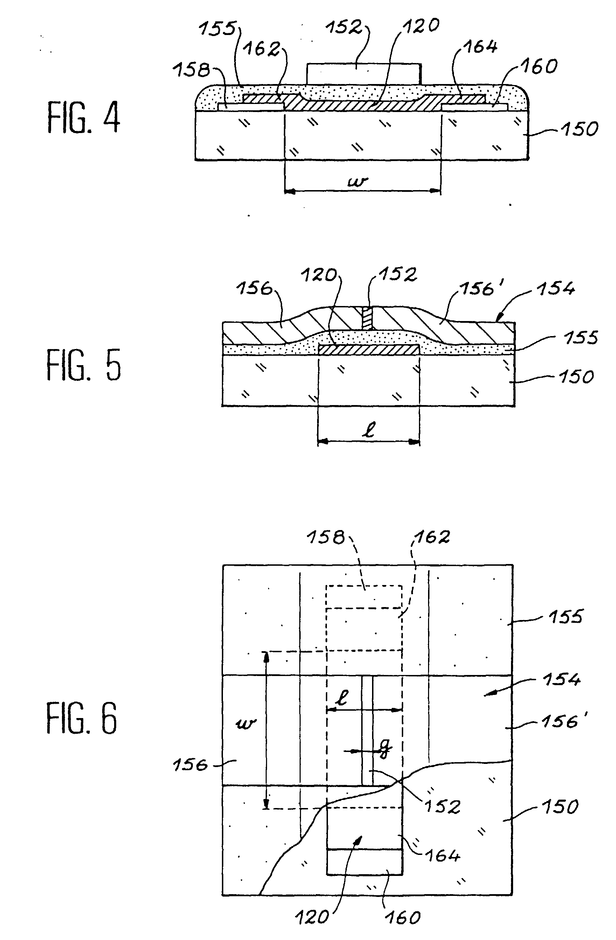

Les déplacements sont, comme évoqué ci-dessus, comptés par rapport à une référence appelée "top zéro". Il s'agit par exemple, comme le montre la figure 3, d'une marque magnétique 46 sur une piste magnétique 40. Des flèches symbolisant l'aimantation, montrent que la marque 46 présente une aimantation opposée à celle du reste de la piste 40. Lors de son passage, en face d'une magnétorésistance MR, cette dernière délivre un signal de référence.

Des codeurs magnétiques du type décrit, présentent l'avantage d'être simples mais ne permettent pas une bonne résolution de mesure.

Pour augmenter la précision du codeur, une possibilité est de réduire le pas des marques magnétique, c'est-à-dire le pas des régions magnétiques de la piste. Or, la diminution du pas, et donc de la taille de ces régions, s'accompagne inévitablement d'une diminution du flux magnétique vu par la ou les magnétorésistances.

Pour compenser la diminution du flux il faut diminuer également la distance d (voir figure 2) qui sépare les magnétorésistances de la piste magnétique.

Cependant, les magnétorésistances présentent une largeur finie 1 de l'ordre de 2µm. Ainsi, le fait de réduire la distance d et le pas p des régions entraîne aussi une perte de résolution spatiale de mesure des magnétorésistances qui sont alors trop larges par rapport au pas. Ceci va à l'encontre du but recherché.

La difficulté d'obtenir une bonne résolution est également un handicap pour la réalisation de marques de références dites "top zéro".

Un but de la présente invention est donc de proposer un codeur avec lequel il est possible d'augmenter fortement la résolution des mesures.

Un autre but de l'invention est celui de fournir des signaux de référence de "top zéro" avec une grande précision.

On connaît par le document FR-A-2 657 189 une tête magnétique de lecture et d'écriture équipée d'un élément magnétorésistant et d'un guide de flux, prévue pour l'enregistrement magnétique.

### Exposé de l'invention

L'invention permet d'atteindre ces buts en proposant un codeur magnétique pour la lecture de marques sur un support magnétique associé, le codeur comportant au moins une magnétorésistance et le support magnétique comportant une succession de régions aimantées et agencées le long du support, caractérisé en ce que le codeur magnétique comporte en outre un guide de flux pour diriger un flux magnétique engendré, par le support magnétique en mouvement par rapport au codeur, vers la magnétorésistance, ledit guide de flux comportant des pièces polaires de lecture séparées par au moins un entrefer qui présente une longueur inférieure au plus petit pas des régions aimantées. Les pièces polaires présentent des extrémités situées au moins en partie sous la magnétorésistance, c'est-à-dire dans un plan situé entre la magnétorésistance et un plan de lecture d'un support magnétique. Ainsi, la magnétorésistance est située au-dessus de l'entrefer.

Selon un aspect particulier de l'invention, la piste magnétique peut comporter des régions aimantées dites régulières agencées avec un pas régulier p voisin de 1,2xg, et au moins une région dite de repère, intercalée dans la succession de régions régulières et formant localement un pas p' supérieur à p, par exemple de l'ordre de p'=1,5p.

Il s'avère en effet que pour un pas p tel que p=1,2g, la réponse du capteur est minimale. Ainsi, la présence d'une ou plusieurs régions avec un pas plus grand sont autant de marques pouvant servir de référence pour une information de "top zéro".

Pour augmenter la résolution du capteur et/ou pour bénéficier d'un signal de "top zéro" avec une bonne amplitude, le codeur peut comporter une pluralité de magnétorésistances, dites actives, disposées en ligne le long du support magnétique, les magnétorésistances étant équipées d'un guide de flux avec une pluralité d'entrefers respectivement associés aux magnétorésistances, et deux à deux séparés par des distances inégales, le support magnétique comportant une pluralité de régions de repère, deux à deux séparées par des distances respectivement égales aux distances séparant les entrefers.

D'autres caractéristiques et avantages de l'invention ressortirons mieux de la description qui va suivre, en référence aux dessins annexés, donnée à titre purement illustratif et non limitatif.

### Brève description des figures

- la figure 1, déjà décrite, est un schéma électrique illustrant un détail de câblage d'un codeur magnétique de type connu,
- la figure 2, déjà décrite, est une vue schématique d'un support magnétique et montre la disposition des magnétorésistances du codeur de la figure 1 par rapport à la piste magnétique,
- la figure 3, déjà décrite, est une vue schématique d'un support magnétique avec une marque dite "top zéro" de type connu,
- la figure 4 est une coupe transversale schématique d'un codeur conforme à l'invention,
- la figure 5 est une coupe longitudinale schématique du codeur de la figure 4,
- la figure 6 est une vue schématique de dessus du codeur de la figure 4,
- la figure 7 est une coupe schématique d'un codeur à une seule magnétorésistance conforme à l'invention associée à un support magnétique,
- la figure 8 est une coupe schématique d'un codeur conforme à l'invention avec une pluralité de magnétorésistances,
- la figure 9 est un schéma électrique de câblage du codeur de la figure 8, dans le cas particulier de l'utilisation de quatre magnétorésistances,
- la figure 10 est une courbe exprimant l'amplitude du signal délivré par un codeur conforme à l'invention en fonction du pas de régions aimantées d'un support magnétique,
- la figure 11 est une représentation schématique d'une piste magnétique conforme à l'invention, et
- la figure 12 est une courbe indiquant le signal délivré par le codeur de la figure 8 détectant le passage d'une piste conforme à la figure 11.

### Description détaillée de modes de réalisation

Les figures 4, 5 et 6 montrent un codeur magnétique conforme à l'invention. Celui-ci comporte une magnétorésistance 120 sous la forme d'un ruban avec une largeur active w et une longueur 1 formé sur un substrat isolant 150. Elle peut être soit du type monolithique soit du type multicouches. Les largeur w et longueur 1 représentées sur les figures 4, 5 et 6 sont mesurées respectivement parallèlement et perpendiculairement à l'entrefer 152 d'un guide de flux 154 associé à la magnétorésistance.

L'entrefer 152 de longueur g sépare comme le montrent les figures 5 et 6, deux pièces polaires 156, 156' du guide de flux 154 dont les extrémités chevauchent au moins en partie la magnétorésistance.

Le guide de flux 154 est isolé électriquement de la magnétorésistance par une couche d'un matériau diélectrique 155.

Des prises de connexions 158, 160 formées sur le substrat sont reliées aux extrémités libres 162, 164 de la magnétorésistance pour la brancher dans un circuit non représenté. Comme il apparaît sur les figures 4 et 6, les extrémités de la magnétorésistance 162, 164 chevauchent les prises de contact 158, 160. Les prises de connexion et la magnétorésistance peuvent être déposées sur le substrat selon des procédés de lithographie. Les pièces polaires 156 et 156' sont formées par dépôt électrolytique par exemple et peuvent subir un rodage afin de les rendre planes.

Pour la réalisation des pièces polaires et de l'entrefer on peut utiliser par exemple le procédé décrit dans le brevet européen EP-0 152 326. Par ailleurs, les brevets français FR-2 645 314 et FR-2 657 189 illustrent des procédés de réalisation de magnétorésistances dans des applications aux têtes magnétiques.

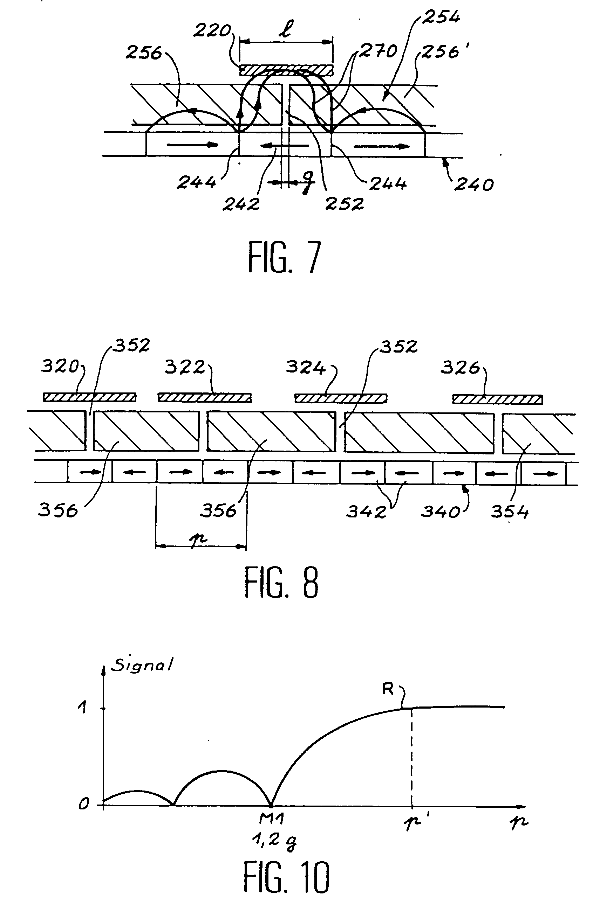

La figure 7 met en évidence le rôle du guide de flux. Elle montre un capteur avec une magnétorésistance 220 et un guide de flux 254 disposé en regard d'une piste d'un support magnétique 240 comportant une succession de régions 242 aimantées en sens inverse.

Lorsque l'entrefer 252 du guide de flux se situe entre deux transitions 244 de régions, comme le montre la figure 7, la magnétorésistance constitue un court-circuit dans le chemin magnétique formé par les pièces polaires 256 et 256' du guide 254. Les lignes de flux 270 sont donc captées par les magnétorésistances.

Lorsque l'entrefer 252 se trouve juste au-dessus d'une transition 244, aucun flux par contre ne traverse la magnétorésistance.

Grâce au guide de flux, il est possible de conserver la longueur 1 de la magnétorésistance constante de l'ordre de 2µm par exemple tout en diminuant le pas des régions de la piste magnétique (par exemple p=2µm au lieu de 20µm dans l'art antérieur). La résolution des mesures du codeur en est donc améliorée.

Pour réaliser les pistes de comptage, comme le montre la figure 8, le codeur peut comporter quatre magnétorésistances actives 320, 322, 324, 326 associées à un guide de flux 354 avec une pluralité de pièces polaires 356 formant quatre entrefers 352 associés respectivement à chaque magnétorésistance. Les régions 342 d'une piste magnétique 340 présentent un pas réduit.

Les différentes magnétorésistances peuvent être montées en pont comme dans la figure 1, mais en remplaçant respectivement 20, 22, 24, 26 par 320, 322, 324, 326 dans le cas où les régions 342 présentent un pas régulier.

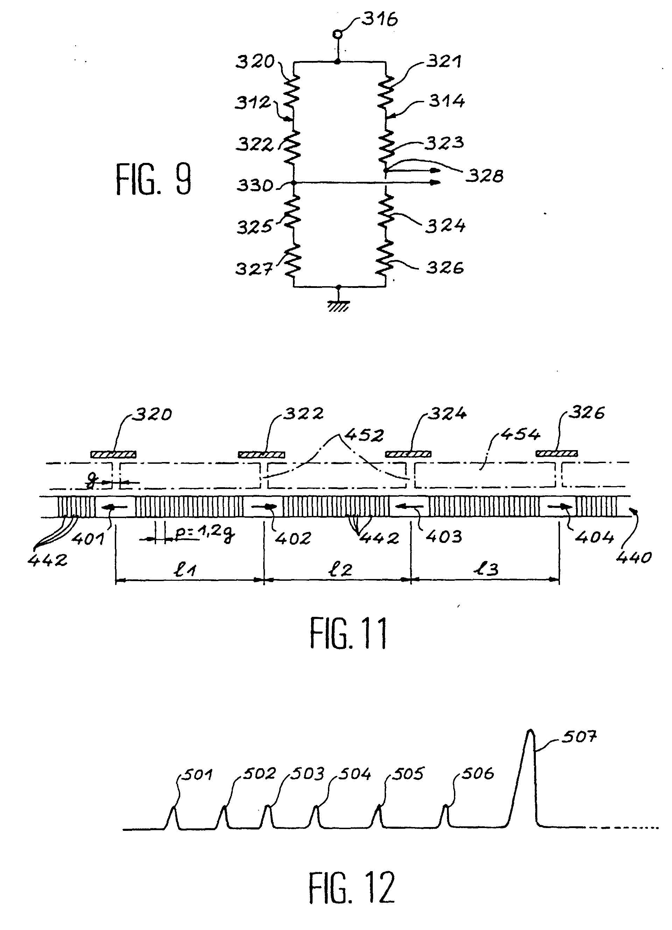

Pour réaliser le top zéro qui sert de référence et donc pour permettre de lire des régions de pas irrégulier, les magnétorésistances 320, 322, 324 et 326 sont comme le montre la figure 9, montées dans un pont de mesure 310, conjointement avec quatre magnétorésistances dites de compensation et repérées par les références 321, 323, 325, 327. Les magnétorésistances de compensation sont isolées de tout flux magnétique provenant du support magnétique mais contribuent dans le montage de pont de mesure à l'obtention d'une insensibilité aux perturbations extérieures et à l'équilibrage des dérives thermiques.

Le pont de mesure 310 comporte deux branches 312 et 314 reliées en parallèle entre une source de tension 316 et la masse. Les branches 312 et 314 comportent respectivement et dans l'ordre les magnétorésistances 320, 322, 325, 327 et les magnétorésistances 321, 323, 324, 326 ; celles-ci étant respectivement montées en série dans les branches du pont.

Un signal de mesure est prélevé en des bornes 328 et 330 sur les branches 312 et 314, respectivement entre les magnétorésistances 322 et 325 et entre les magnétorésistances 323 et 324. Le signal est ensuite dirigé vers une unité d'exploitation non représentée.

Indépendamment du fait que le codeur de l'invention comporte une ou plusieurs magnétorésistances, comme décrit ci-dessus, l'invention met à profit non seulement un guide de flux pour pouvoir réduire le pas des marques de mesure sur le support magnétique mais aussi un rapport de taille existant entre ce pas et l'entrefer du guide de flux.

Des mesures montrent que la réponse du codeur ne dépend plus de la longueur 1 de la magnétorésistance mais du rapport entre la longueur g de l'entrefer du guide de flux et le pas p des régions de la piste magnétique associée.

La courbe R de la figure 10 montre l'amplitude d'un signal fourni aux bornes du codeur en fonction du pas des régions d'une piste magnétique pour un guide de flux avec un entrefer de longueur g donnée. L'amplitude du signal, reportée en ordonnée est exprimée en unité normalisée. La courbe fait apparaître que l'amplitude du signal décroît avec le pas pour atteindre un premier minimum M1 lorsque le pas p est de l'ordre de p≃1,2g.

On voit également que l'amplitude du signal est maximum pour une valeur de pas p'>1,2g. Si on prend p=1,2g, on montre expérimentalement que la valeur maximum p' est de l'ordre de 1,5p.

De façon avantageuse, pour réaliser une marque de "top zéro", une piste du support magnétique peut comporter une succession de régions aimantées régulières agencées selon un pas p voisin de p=1,2g, pour lesquelles quasiment aucun signal n'est fourni par le codeur et une ou plusieurs régions de repère avec un pas différent, plus grand, dont le passage sous le codeur est détecté et constitue une marque de "top zéro".

Pour un codage de top zéro tel que représenté à la figure 11, il est avantageux que la piste magnétique comporte plusieurs régions de repère séparées par les mêmes distances que les entrefers des guides de flux.

Dans la présente demande, on entend par distances séparant les entrefers, respectivement les guides de flux, les distances considérées de centre à centre des entrefers, respectivement des guides de flux.

Ainsi lorsque les régions de repère coïncident avec les entrefers, les quatre magnétorésistances délivrent simultanément un signal de "top zéro" dont les amplitudes s'additionnent.

Une telle piste 440 est représentée à la figure 11. Elle comporte une succession de régions régulières 442 agencées avec un pas p tel que p≃1,2g et quatre régions de repère 401, 402, 403 et 404 séparées respectivement par des distances l₁, l₂ et l₃, deux à deux différentes et égales aux distances l₁, l₂ et l₃ séparant les entrefers 452 du guide de flux 454 des magnétorésistances 320, 322, 324, 326. De préférence, les distances l₁, l₂, l₃ sont premières entre elles, c'est-à-dire non divisibles entre elles. Il n'y aura qu'une seule coïncidence par passage entre tous les entrefers 452 et les régions 401, 402, 403, 404. L'avantage d'une telle configuration apparaît à la lecture de la courbe de la figure 12. Celle-ci représente le signal prélevé sur le pont de mesure entre les bornes 328 et 330 (figure 9) lors du passage de la piste 440 sur le codeur de la figure 11.

Dans un exemple où l₁=2, l₂=7, l₃=13, le tableau I donne la correspondance entre les signaux 501 à 507 et la position relative de la piste par rapport aux entrefers.

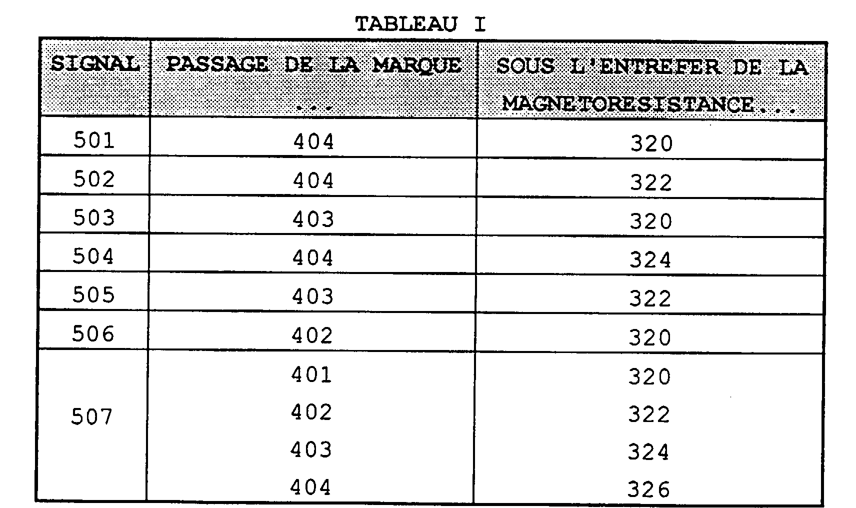

La dernière ligne du tableau montre que le signal 507 correspond à la coïncidence simultanée de toutes les régions de repère avec les magnétorésistances. Comme les distances l₁, l₂ et l₃ sont deux à deux différentes cette simultanéité ne se produit qu'une seule fois lors de la lecture de la piste magnétique.

De plus, le synchronisme de détection sur les quatre magnétorésistances du dispositif donne un signal d'amplitude quatre fois plus élevé et donc facilement détectable.

Grâce à ces caractéristiques la résolution du codeur et la précision de la marque dite "top zéro" sont également accrues.

## Revendications

1. Codeur magnétique pour la lecture de marques sur un support magnétique (240, 340, 440) associé, le codeur comportant au moins une magnétorésistance (120, 220, 320, 322, 324, 326) et le support magnétique comportant une succession de régions aimantées (242, 342, 442) et agencées le long du support, caractérisé en ce que le codeur magnétique comporte en-outre un guide de flux (154, 254, 354, 454) pour diriger un flux magnétique, engendré par le support magnétique (240, 340, 440) en mouvement par rapport au codeur, vers la magnétorésistance (120, 220, 320, 322, 324, 326), ledit guide de flux (154, 254, 354, 454) comportant des pièces polaires (256, 256', 356) de lecture séparées par au moins un entrefer (152, 252, 352, 452) qui présente une longueur g inférieure au plus petit pas des régions aimantées et les pièces polaires présentant des extrémités situées au moins en partie sous la magnétorésistance.

2. Codeur magnétique selon la revendication 1, caractérisé en ce que le support magnétique (440) comporte une piste magnétique avec une succession de régions aimantées (442) dites régulières agencées avec un pas régulier p voisin de 1,2·g, et au moins une région dite de repère (401, 402, 403, 404), intercalée dans la succession de régions régulières (442) et formant localement un pas p' supérieur au pas p.

3. Codeur selon la revendication 2, caractérisé en ce que le pas p' est voisin de 1,5·p.

4. Codeur selon la revendication 2, caractérisé en ce qu'il comporte une pluralité de magnétorésistances (320, 322, 324, 326), dites actives, disposées en ligne le long du support magnétique (440), les magnétorésistances étant équipées d'un guide de flux (454) avec une pluralité d'entrefers (452) respectivement associés aux magnétorésistances, et deux à deux séparés par des distances (l₁, l₂, l₃) inégales, le support magnétique comportant une pluralité de régions de repère (401, 402, 403, 404), deux à deux séparées par des distances (l₁, l₂, l₃) respectivement égales aux distances séparant les entrefers (452).

5. Codeur selon la revendication 4, caractérisé en ce que les entrefers (452) consécutifs sont respectivement séparés par des distances non divisibles entre elles.

6. Codeur selon la revendication 4, caractérisé en ce que les magnétorésistances (320, 322, 324, 326) sont montées dans un pont de détection.

7. Codeur selon la revendication 6, caractérisé en ce que le pont comporte deux branches (312, 314) branchées en parallèle entre une source de tension (316) et la masse avec respectivement deux magnétorésistances actives de lecture (320, 322 et 324, 326) et deux magnétorésistances (325, 327 et 321, 323) dites de compensation montées en séries dans les branches.

## Patentansprüche

1. Magnetischer Codierer zum Lesen von Markierungen auf einem dazugehörigen magnetischen Träger (240, 340, 440), wobei der Codierer wenigstens einen Magnetowiderstand (120, 220, 320, 322, 324, 326) umfasst und der magnetische Träger eine Aufeinanderfolge magnetisierter und längs des Trägers angeordneter Zonen (242, 342, 442) umfasst,
**dadurch gekennzeichnet**,
dass der magnetische Codierer außerdem einen Flußleiter (154, 254, 354, 454) umfasst, um einen Magnetfluß zum Magnetowiderstand (120, 220, 320, 322, 324, 326) zu leiten, der durch den in Bezug auf den Codierer bewegten magnetischen Träger (240, 340, 440) erzeugt wird, wobei der genannte Flußleiter (154, 254, 354, 454) Lese-Polschuhe (256, 256', 356) umfasst, getrennt durch wenigstens einen Spalt (152, 252, 352, 452), der eine Länge g hat, die kleiner ist als die kleinste Teilung der magnetisierten Zonen, und die Polschuhe dabei Enden aufweisen, die sich wenigstens teilweise unter dem Magnetowiderstand befinden.

2. Codierer nach Anspruch 1, dadurch gekennzeichnet, dass der magnetische Träger (440) eine Magnetspur mit einer Aufeinanderfolge sogenannter regelmäßig angeordneter magnetisierter Zonen (442) mit einer gleichmäßigen Teilung p von ungefähr 1,2·g umfasst und wenigstens eine sogenannte Bezugszone (401, 402, 403, 404), die eingefügt ist in die Aufeinanderfolge regelmäßiger Zonen (442) und lokal eine Teilung p' bildet, die größer ist als die Teilung p.

3. Codierer nach Anspruch 2, dadurch gekennzeichnet, dass die Teilung p' ungefähr 1,5·p ist.

4. Codierer nach Anspruch 2, dadurch gekennzeichnet, dass er eine Vielzahl sogenannter aktiver Magnetowiderstände (320, 322, 324, 326) umfasst, linienförmig längs des magnetischen Trägers (440) angeordnet, wobei die Magnetowiderstände mit einem Flußleiter (454) mit einer Vielzahl jeweils den Magnetowiderständen zugeordneter Spalte (452) ausgestattet ist, paarweise getrennt durch ungleiche Abstände (l1, l2, l3), wobei der magnetische Träger eine Vielzahl Bezugszonen (401, 402, 403, 404) umfasst, paarweise getrennt durch Abstände (l1, l2, l3), die jeweils gleich den Abständen sind, die die Spalte (452) trennen.

5. Codierer nach Anspruch 4, dadurch gekennzeichnet, dass die aufeinanderfolgenden Spalten (452) jeweils durch nicht untereinander teilbare Abstände getrennt sind.

6. Codierer nach Anspruch 4, dadurch gekennzeichnet, dass die Magnetowiderstände (320, 322, 324, 326) in eine Detektionsbrücke eingeschaltet sind.

7. Codierer nach Anspruch 6, dadurch gekennzeichnet, dass die Brücke zwei Zweige (312, 314) umfasst, parallelgeschaltet zwischen einer Spannungsquelle (316) und der Masse, mit jeweils zwei aktiven Lese-Magnetowiderständen (320, 322 und 324, 326) und zwei in den Zweigen in Serie geschalteten sogenannten Kompensations-Magnetowiderständen (325, 327 und 321, 323).

## Claims

1. Magnetic encoder for reading marks on an associated magnetic support (240, 340, 440), the encoder having at least one magnetoresistor (120, 220, 320, 322, 324, 326) and the magnetic support having a succession of magnetized regions (242, 342, 442) arranged along the support, characterized in that the magnetic encoder also has a flux guide (154, 254, 354, 454) for directing a magnetic flux, produced by the magnetic support (240, 340, 440) moving with respect to the encoder, to the magnetoresistor (120, 220, 320, 322, 324, 326), said flux guide (154, 254, 354, 454) having reading pole pieces (256, 256', 356) separated by at least one air gap (152, 252, 352, 452) having a length g.smaller than the smallest of the magnetized regions and the pole pieces have ends located at least partly beneath the magnetoresistor.

2. Magnetic encoder according to claim 1, characterized in that the magnetic support (440) has a magnetic track with a succession of so-called regular magnetized regions (442) arranged with a regular spacing p close to 1.2.g and at least one so-called reference region (401, 402, 403, 404) located in the succession of regular regions (442) and locally forming a spacing p' exceeding the spacing p.

3. Encoder according to claim 2, characterized in that the spacing p' is close to 1.5.p.

4. Encoder according to claim 2, characterized in that it has a plurality of so-called active magnetoresistors (320, 322, 324, 326) arranged in linear manner along the magnetic support (440), the magnetoresistors being equipped with a flux guide (454) having a plurality of air gaps (452) respectively associated with the magnetoresistors and pairwise separated by unequal distances (l₁, l₂, l₃), the magnetic support having a plurality of reference regions (401, 402, 403, 404), pairwise separated by distances (l₁, l₂, l₃) respectively equal to the distances separating the air gaps (452).

5. Encoder according to claim 4, characterized in that the consecutive air gaps (452) are respectively separated by distances which cannot be divided by one another.

6. Encoder according to claim 4, characterized in that the magnetoresistors (320, 322, 324, 326) are connected in a detection bridge.

7. Encoder according to claim 6, characterized in that the bridge has two branches (312, 314) connected in parallel between a power supply (316) and earth with respectively two active reading magnetoresistors (320, 322 and 324, 326) and two compensating magnetoresistors (325, 327 and 321, 323) connected in series in the branches.
